# EUROPÄISCHE PATENTSCHRIFT

(11) **EP 2 149 470 B1**
(45) Veröffentlichungstag und Bekanntmachung des Hinweises auf die Patenterteilung: **07.03.2012**
(21) Anmeldenummer: 09009711.4
(22) Anmeldetag: 28.07.2009
(51) Int. Cl.: B60K 7/00

(54) **Elektro-Radnabenmotor für Kraftfahrzeuge und Kraftfahrzeug**
Electric hub motor for motor vehicles and motor vehicle
Moteur à moyeu de roue électrique pour véhicules automobiles et véhicule automobile

(30) Priorität: 30.07.2008 DE 102008036560
(43) Veröffentlichungstag der Anmeldung: 03.02.2010
(73) Patentinhaber: Sport-Service-Lorinser Sportliche Autoausrüstung GmbH, 71332 Waiblingen (DE)
(72) Erfinder: Oberdörfer-Schmidt, Martin, 73663 Berglen (DE)
(74) Vertreter: Wilhelm, Martin

(56) Entgegenhaltungen:
- FR-A- 2 829 434
- JP-A- 2008 044 588

## Beschreibung

Die Erfindung betrifft einen Elektro-Radnabenmotor für Kraftfahrzeuge mit einem an einer Fahrzeugachse befestigten Stator und einem an einer Fahrzeugfelge angeordneten Rotor. Die Erfindung betrifft auch ein Kraftfahrzeug mit wenigstens einem erfindungsgemäßen Elektro-Radnabenmotor.

JP2008 044588A offenbart einen Elektro-Radnabenmotor gemäß dem Oberbegriff des Anspruchs 1.

Elektro-Radnabenmotoren für Kraftfahrzeuge sind seit langem bekannt und erlauben es, eine Antriebskraft ohne Zwischenschaltung eines Getriebes auf ein Fahrzeugrad zu übertragen. Bekannte Elektro-Radnabenmotoren für Kraftfahrzeuge bedingen einen speziellen Aufbau der Fahrzeugachse sowie der zugehörigen Felge.

Mit der Erfindung soll ein Elektro-Radnabenmotor für Kraftfahrzeuge bereitgestellt werden, der in einfacher Weise an einem konventionellen, mit Verbrennungsmotor versehenen Kraftfahrzeug nachrüstbar ist. Weiterhin soll ein Kraftfahrzeug bereitgestellt werden, das mit einem Elektro-Radnabenmotor versehen ist und das dennoch hinsichtlich seiner Fahrfunktionen unverändert ist.

Erfindungsgemäß ist hierzu ein Elektro-Radnabenmotor für Kraftfahrzeuge mit einem an einer Fahrzeugachse befestigten Stator und einem an einer Fahrzeugfelge angeordneten Rotor vorgesehen, bei dem der Stator an einer Bremsankerplatte der Fahrzeugachse anordenbar ist.

Durch Anordnung des Stators an einer Bremsankerplatte der Fahrzeugachse können vorhandene Bremseinrichtungen an der Fahrzeugachse beibehalten werden. Dennoch steht zwischen der Felge und der Bremseinrichtung an der Fahrzeugachse genügend Platz zur Verfügung, um sowohl einen Stator als auch einen Rotor eines leistungsfähigen Elektro-Radnabenmotors anzubringen. Indem der Stator an einer Bremsankerplatte der Fahrzeugachse angeordnet wird, kann der Stator zum einen sicher und platzsparend befestigt werden und zum anderen müssen die Bremseinrichtungen der Fahrzeugachse nicht verändert werden. Gerade bei Fahrzeugen mit Trommelbremsen ist die Bremsankerplatte kreisrund ausgebildet und weist einen umlaufenden kreiszylinderförmigen Kragen auf. Auf diesem Kragen kann ohne weiteres der Stator eines Elektro-Radnabenmotors sicher befestigt werden, ohne dass eine wesentliche Abänderung der Bremsankerplatte erforderlich wäre.

In Weiterbildung der Erfindung weist der Stator einen Adapterring zum Befestigen an der Bremsankerplatte auf. Vorteilhafterweise ist der Adapterring mit Zentriermitteln versehen.

Mittels eines mit dem Stator einstückigen oder separaten Adapterrings kann der Stator sicher und zur Drehachse zentriert an der Bremsankerplatte befestigt werden. Zweckmäßigerweise sind Zentriermittel vorgesehen, beispielsweise Einstellschrauben, um den Stator exakt zentrisch zur Drehachse auszurichten. Dadurch kann ein geringer Luftspalt des Elektro-Radnabenmotors zwischen Stator und Rotor erzielt werden, was dem Betriebsverhalten des Elektro-Radnabenmotors zugute kommt.

In Weiterbildung der Erfindung ist ein Mittenbereich des Stators als Bremsankerplatte ausgebildet.

Auf diese Weise muss zum Nachrüsten des Elektro-Radnabenmotors lediglich die vorhandene Bremsankerplatte gegen den Stator ausgewechselt werden. Nachfolgend kann dann die konventionelle Bremseinrichtung wieder aufgebaut werden. Indem ein Mittenbereich des Stators als Bremsankerplatte ausgebildet ist, wird eine Zentrierung des Stators erheblich erleichtert, da dieser dann in der exakt gleichen Position wie die bereits zentrierte Bremsankerplatte angeordnet wird. Gerade bei Fahrzeugachsen mit Trommelbremsen bietet sich das Integrieren der Bremsankerplatte in den Stator an, um eine einfach nachrüstbare, stabile und wirtschaftlich herzustellende Elektro-Radnabenmotoreinheit bereitzustellen.

In Weiterbildung der Erfindung weist der Rotor an der Fahrzeugfelge angeordnete Permanentmagnete auf. Permanentmagnete benötigen wenig Platz und können beispielsweise auf die Innenseite der Fahrzeugfelge aufgeklebt werden. Moderne Permanentmagnetmaterialien erlauben es, äußerst leistungsfähige Elektromotoren aufzubauen. Alternativ zu einem Verkleben der Permanentmagnete mit der Fahrzeugfelge kann beispielsweise auch eine Fahrzeugfelge mit integrierten Permanentmagneten verwendet werden. Die Permanentmagnete können beispielsweise in dafür vorgesehenen Ausnehmungen auf der Innenseite der Felge angeordnet sein. Die Magnete können beispielsweise in vorgefertigte Ausnehmungen eines magnetisch leitfähigen Adapterrings angeordnet werden, beispielsweise an einer gegossenen Aluminiumfelge, so dass sie bereits korrekt platziert sind und in diesen Ausnehmungen lediglich noch fixiert werden müssen, beispielsweise mittels Verkleben oder Vergießen.

In Weiterbildung der Erfindung sind die Permanentmagnete auf einer, im montierten Zustand dem Kraftfahrzeug zugewandte Seite der Felge angeordnet und dem Stator zugewandt.

Auf diese Weise wird das äußere Erscheinungsbild der Felge nicht verändert. Moderne Fahrzeugfelgen sind in der Regel stark geschüsselt und nehmen die Bremseinrichtung der Fahrzeugachse innerhalb ihres Umfangs auf. Auf der, dem Kraftfahrzeug zugewandten Seite der Felge steht daher in der Regel genügend Raum zur Verfügung, um den erfindungsgemäßen Elektro-Radnabenmotor bzw. die Permanentmagnete des Rotors anzuordnen.

Die Erfindung betrifft auch ein Kraftfahrzeug mit wenigstens einem erfindungsgemäßen Elektro-Radnabenmotor, bei dem ein Stator an einer Bremsankerplatte und einer Rotor an einer Fahrzeugfelge angeordnet ist.

Auf diese Weise kann ein konventionelles Kraftfahrzeug mit zusätzlichen Elektro-Radnabenmotoren versehen werden, ohne dass die Fahrfunktionen des Kraftfahrzeugs, also dessen Bremseinrichtungen sowie sein Antriebsmotor, in irgendeiner Weise verändert werden müssen. Die Elektro-Radnabenmotoren können dann als Hilfsantrieb oder, im Innenstadtbereich, sogar als einziger Antrieb genutzt werden. Selbstverständlich ist es auch möglich, den Elektro-Radnabenmotor als Generator zu verwenden oder auch als Zusatzbremse. Beispielsweise würden wenigstens zwei Elektro-Radnabenmotoren vorgesehen, die an der Hinterachse angeordnet werden. Mit einem geeigneten Steuergerät kann dadurch ein Zusatzantrieb sowie auch eine Rückspeisung in eine Fahrbatterie erfolgen. Mittels des Zusatzantriebes kann ein vorhandener Verbrennungsmotor beispielsweise unterstützt werden, um den Verbrennungsmotor im jeweils optimalen Verbrauchsbereich zu betreiben. Im Stadtverkehr oder bei sonstigen geeigneten Fahrsituationen können die Elektro-Radnabenmotoren dann als einziger Antrieb verwendet werden. Beispielsweise ist es auch möglich, ein Kraftfahrzeug an jedem Rad mit einem erfindungsgemäßen Elektro-Radnabenmotor zu versehen, um auf einfache Weise einen Allradantrieb zu erhalten. Zweckmäßigerweise erhält das Steuergerät für die Elektro-Radnabenmotoren, unabhängig davon, ob lediglich zwei Elektro-Radnabenmotoren oder vier Elektro-Radnabenmotoren vorgesehen sind, Eingangssignale von anderen Fahrzeugsteuergeräten, die Auskunft über die aktuelle Fahrsituation, den Lastzustand des Verbrennungsmotors, die Fahrpedalstellung und die Bremspedalstellung geben.

In Weiterbildung der Erfindung ist der Stator so angeordnet, dass er eine Bremstrommel radial außen umgibt.

Gerade bei Fahrzeugen mit Trommelbremsen lässt sich der erfindungsgemäße Elektro-Radnabenmotor in besonders einfacher Weise vorsehen, da in radialer Richtung gesehen zwischen dem Außenumfang der Trommelbremse und dem Innenumfang der Fahrzeugfelge genügend Platz für die Anordnung eines Stators sowie eines Rotors vorhanden ist. Der Stator kann bei Fahrzeugen mit Trommelbremsen in sehr einfacher Weise am Außenumfang der Bremsankerplatte befestigt werden. Der Rotor kann in einfacher Weise mittels an einer Fahrzeugfelge angeordneter Permanentmagnete gebildet sein.

Weitere Merkmale und Vorteile der Erfindung ergeben sich aus den Ansprüchen und der nachfolgenden Beschreibung bevorzugter Ausführungsformen der Erfindung im Zusammenhang mit den Zeichnungen. Einzelmerkmale der unterschiedlichen, dargestellten Ausführungsformen lassen sich dabei in beliebiger Weise miteinander kombinieren, ohne den Rahmen der Erfindung zu überschreiten. In den Zeichnungen zeigen:
- Fig. 1: eine schematische, abschnittsweise Ansicht einer konventi- onellen Fahrzeugachse nach dem Stand der Technik,
- Fig. 2: eine Seitenansicht auf eine Fahrzeugachse mit Trommel- bremse, die mit einem Stator eines erfindungsgemäßen Elektro-Radnabenmotors versehen ist,
- Fig.3: eine schematische, abschnittsweise Schnittansicht der Fahrzeugachse der Fig. 2 mit dem erfindungsgemäßen Elektro-Radnabenmotor,
- Fig. 4: einen Stator eines erfindungsgemäßen Elektro-Radnaben- motors gemäß einer weiteren Ausführungsform der Erfin- dung.
- Fig. 5: eine schematische, abschnittsweise Schnittansicht eines montierten Stators gemäß einer weiteren Ausführungsform der Erfindung,
- Fig. 6: eine schematische Draufsicht auf den Adapterring des Sta- tors der Fig. 5 und
- Fig. 7: eine schematische Schnittansicht einer Felge mit einem Ro- tor gemäß einer weiteren Ausführungsform der Erfindung.

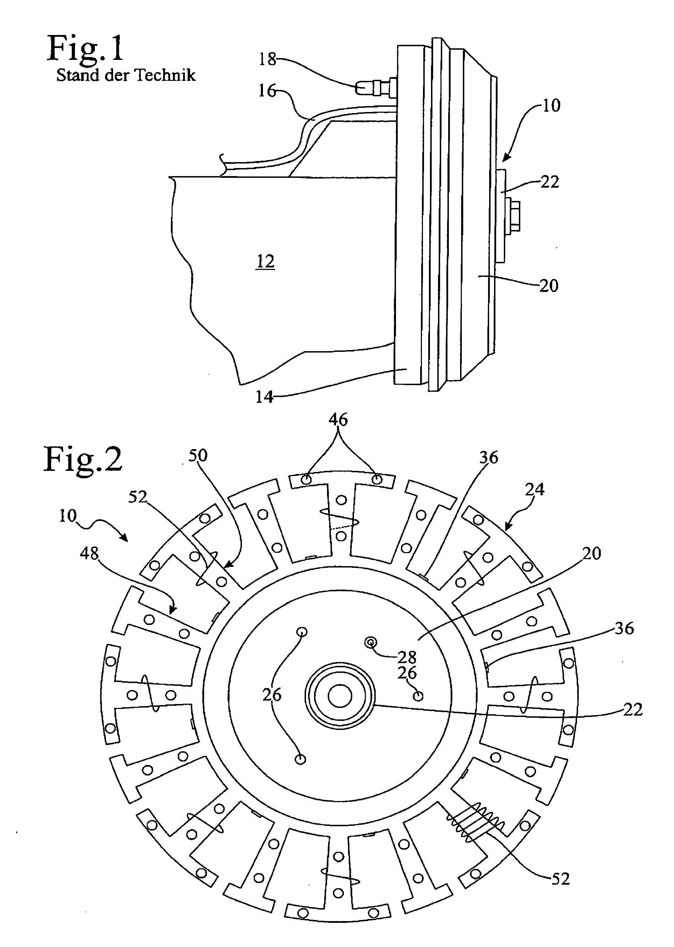

Die Darstellung der Fig. 1 zeigt abschnittsweise eine Fahrzeugachse 10 nach dem Stand der Technik, die einen federnd an einem Fahrzeugrahmen angelenkten Achsträger 12 aufweist. An dem Achsträger 12 ist eine Bremsankerplatte 14 befestigt, an der wiederum in der Darstellung der Fig. 1 nicht erkennbare Bremsbacken sowie ein Radbremszylinder befestigt sind. Der Radbremszylinder wird über eine abschnittsweise dargestellte Bremsleitung 16 mit Bremsflüssigkeit beaufschlagt. Weiterhin ist in der Darstellung der Fig. 1 eine Entlüftungsschraube 18 des Radbremszylinders zu erkennen. Gegenüber dem Achsträger 12 drehbar ist eine Bremstrommel 20, die selbst drehfest an einer drehbar im Achsträger 12 gelagerten Radnabe 22 befestigt ist. Die Radnabe 22 ist im Achsträger 12 um eine Drehachse 23 drehbar gelagert.

Wie in der Darstellung der Fig. 1 zu erkennen ist, ist die Bremsankerplatte 14 als etwa schüsselartiges Teil ausgebildet.

Die Darstellung der Fig. 2 zeigt die Seitenansicht der Fahrzeugachse 10, also in der Darstellung der Fig. 1 von rechts auf die Bremstrommel 20 gesehen, wobei die Fahrzeugachse 10 nun mit einem Stator 24 eines erfindungsgemäßen Elektro-Radnabenmotors versehen ist. Der Stator 24 ist auf den in Fig. 1 erkennbaren Außenumfang der Bremsankerplatte 14 aufgesetzt, so dass in der Ansicht der Fig. 2 lediglich die Bremstrommel 20 sowie die Radnabe 22 zu erkennen sind. Die Bremstrommel 20 weist drei Durchgangsöffnungen 26 auf, durch die Radbolzen hindurchgesteckt werden können, um eine Fahrzeugfelge an der Radnabe befestigen zu können. Auf der Radnabe 22 ist die Bremstrommel 20 mittels eines Schraubbolzens 28 befestigt.

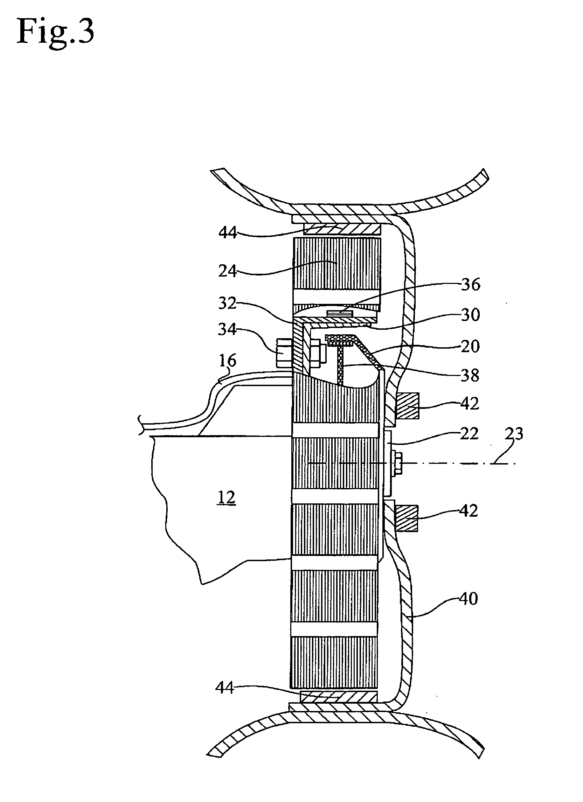

Die Ansicht der Fig. 3 zeigt die Fahrzeugachse 10 der Fig. 2 von hinten, beispielsweise in Fahrtrichtung und teilweise geschnitten. Wie bei der in Fig. 1 dargestellten Achse ist an dem Achsträger 12 eine Radnabe 22 drehbar gelagert, auf der wiederum eine Bremstrommel 20 drehfest angeordnet ist. Am Achsträger 12 befestigt ist eine Bremsankerplatte 30, die, ähnlich der Bremsankerplatte 14 der Fig. 1, eine etwa schüsselähnliche Form hat. Die Bremstrommel 20 und die Bremsankerplatte 30 sind in der Fig. 3 abschnittsweise geschnitten dargestellt, um die Anordnung des Stators 24 auf der Bremsankerplatte 30 darstellen zu können.

Der Stator 24 ist mit einem Adapterring 32 versehen, der im Querschnitt L-förmig ausgebildet ist und die Form eines Kreisrings hat. Dieser Adapterring 32 ist mittels mehrerer Schraubbolzen 34 mit der Bremsankerplatte 30 verbunden. Die Schraubbolzen 34 sind in Durchgangsöffnungen des Adapterrings 32 bzw. der Bremsankerplatte 30 eingesteckt, die auf einer, dem Fahrzeug zugewandten Innenseite des Adapterrings 32 bzw. der Bremsankerplatte 30 liegen, die darüber hinaus senkrecht zu einer Drehachse der Radnabe 22 angeordnet ist. Die Schraubbolzen 34 sind dabei mit etwas Spiel in den Durchgangsöffnungen in der Bremsankerplatte 30 angeordnet. Um den Stator 24 auf der Bremsankerplatte 30 relativ zur Drehachse der Radnabe 22 exakt zu zentrieren, sind mehrere Einstellschrauben 36 vorgesehen, die in Gewindebohrungen des Adapterrings 32 angeordnet sind und sich auf einem Außenumfang der Bremsankerplatte 30 abstützen können. Mittels der Einstellschrauben 36, von denen wenigstens drei Stück über den Umfang des Adapterrings 32 verteilt sind, lässt sich der Stator 24 exakt zur Drehachse 23 der Radnabe 22 zentrieren.

Die spezielle Ausbildung des Adapterringes 32 sowie dessen Befestigung an der Bremsankerplatte 30 ist lediglich beispielhaft dargestellt. Im Rahmen der Erfindung kann jede zweckmäßige Befestigung des Stators 24 an der Bremsankerplatte 30 erfolgen.

Innerhalb der Bremstrommel 20 sind noch schematisch Bremsbacken 38 dargestellt, die von innen gegen den Innenumfang der Bremstrommel 20 drücken, um dadurch das Fahrzeug nach Wunsch zu verzögern.

Auf die Radnabe 22 ist eine geschnitten dargestellte Stahlfelge 40 aufgesetzt und mittels Radbolzen 42 befestigt. Die Felge 40 trägt auf ihrer Innenseite, die dem Radträger 12 zugewandt ist und die parallel zur Drehachse der Radnabe 22 ausgerichtet ist, mehrere Permanentmagnete 44, die dadurch gegenüberliegend dem Außenumfang des Stators 24 angeordnet sind. Die Stahlfelge 40 bildet zusammen mit den Permanentmagneten 44 den Rotor des erfindungsgemäßen Elektro-Radnabenmotors.

Es ist anhand der Darstellung der Fig. 3 zu erkennen, dass der erfindungsgemäße Elektro-Radnabenmotor mit dem Stator 24 und dem Rotor innerhalb der Felge 40 angeordnet werden kann. Darüber hinaus ist eine dem Achsträger 12 abgewandte Außenseite der Felge unverändert. Durch die Schüsselung der Felge 40 steht zwischen der Bremsankerplatte 30 und der radial innen liegenden Seite der Felge 40 genügend Platz zur Verfügung, um den Stator 24 und die Permanentmagnete 44 anordnen zu können.

Anhand einer erneuten Erläuterung der Fig. 2 wird nun noch der Aufbau des Stators 24 erläutert. Der Stator 24 ist aus mehreren Schichten sogenannten Elektroblechs aufgebaut, wobei die einzelnen Elektroblechlagen gegeneinander isoliert und beispielsweise mittels Nieten 46 zusammengehalten werden. Als Elektroblech wird weichmagnetisches Blechmaterial bezeichnet, das üblicherweise zur Herstellung von magnetischen Kreisen für elektrische Maschinen verwendet wird. Der Stator 24 weist insgesamt 16 sich radial nach außen erstreckende Vorsprünge 48, 50 auf, die jeweils an ihrem radial äußeren Ende mit einem Kreisringabschnitt versehen sind. Lediglich die in der Ansicht der Fig. 2 dickeren Vorsprünge 50 sind dabei mit jeweils einer Drahtwicklung 52 versehen. Lediglich eine der Drahtwicklungen 52 ist mit mehreren Windungen dargestellt, tatsächlich weisen aber alle Vorsprünge 50 die gleiche Anzahl an Drahtwicklungen 52 auf. Die Vorsprünge 48 dienen lediglich zum Schließen des magnetischen Kreises über die Permanentmagnete des Rotors. Es ist festzuhalten, dass der Stator 24 lediglich beispielhaft dargestellt ist und jede andere zweckmäßige Form aufweisen kann, um einen leistungsfähigen elektrischen Motor zu realisieren.

Vorteilhafterweise ist der erfindungsgemäße Elektro-Radnabenmotor als bürstenloser, elektrisch kommutierter Elektromotor aufgebaut, wobei die hierzu erforderlichen elektrischen Steuereinrichtungen der Einfachheit halber nicht dargestellt sind und nicht erläutert werden.

Anhand der Fig. 2 gut zu erkennen sind die bereits anhand der Fig. 3 erläuterten Einstellschrauben 36, die eine Zentrierung des Stators 24 auf der Bremsankerplatte 30 ermöglichen. Indem der Luftspalt zwischen dem Außenumfang des Stators 24 und dem durch die Permanentmagneten 44 gebildeten Innenumfang des Rotors möglichst gering gewählt wird, können positive Betriebseigenschaften des erfindungsgemäßen Elektro-Radnabenmotors erzielt werden.

Der erfindungsgemäße Elektro-Radnabenmotor kann durch einfaches Aufsetzen des Stators unter Zwischenfügung des Adapterrings auf die Bremsankerplatte einer konventionellen Fahrzeugachse in einfacher Weise nachgerüstet werden. Alternativ weist der Stator eine den Adapterring einschließende Formgebung auf.

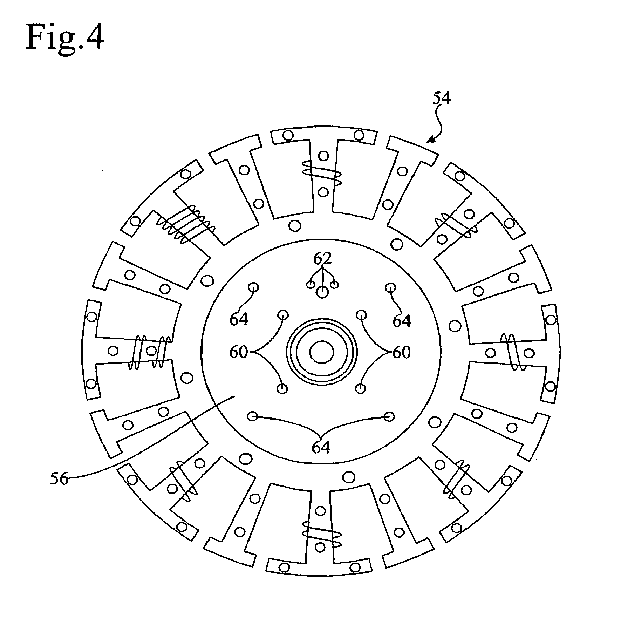

Die Darstellung der Fig. 4 zeigt einen Stator 54 eines Elektro-Radnabenmotors gemäß einer weiteren Ausführungsform der Erfindung. Der Stator 54 in Fig. 4 ist in elektrischer Hinsicht gleich aufgebaut wie der Stator 24 der Fig. 2 und es werden lediglich die zum Stator 24 der Fig. 2 unterschiedlichen Bauteile erläutert. Im Unterschied zum Stator 24 der Fig. 2 wird der Stator 54 nicht mittels eines Adapterrings auf eine vorhandene Bremsankerplatte aufgesetzt, sondern ist in seinem Mittenbereich 56 als Bremsankerplatte ausgebildet. Speziell weist der Stator 54 im Mittenbereich eine zentrale Durchgangsöffnung 58 auf, durch die eine Achse einer Radnabe hindurchgesteckt werden kann. Vier Durchgangsöffnungen 60, die die zentrale Durchgangsöffnung 58 umgeben, dienen zum Durchstecken von Schraubbolzen, die den Stator 54 am Achsträger 12 befestigen. Drei weitere Durchgangsöffnungen 62 dienen zum Befestigen eines Radbremszylinders sowie zum Durchführen einer Bremsleitung. Weiterhin weist der Mittenbereich 56 insgesamt vier Lagerbolzen 64 auf, die zum Anordnen von Bremsbacken einer Trommelbremse dienen.

Indem der Mittenbereich 56 des Stators 54 als Bremsankerplatte ausgebildet ist, kann der Stator 54 mit der Befestigung an dem Achsträger 12 automatisch zentriert werden. Auf diese Weise lässt sich ohne nennenswerten Zentrieraufwand eine exakte Ausrichtung des Stators 54 zum Rotor erreichen, der an der wiederum an der Radnabe befestigten Felge vorgesehen ist.

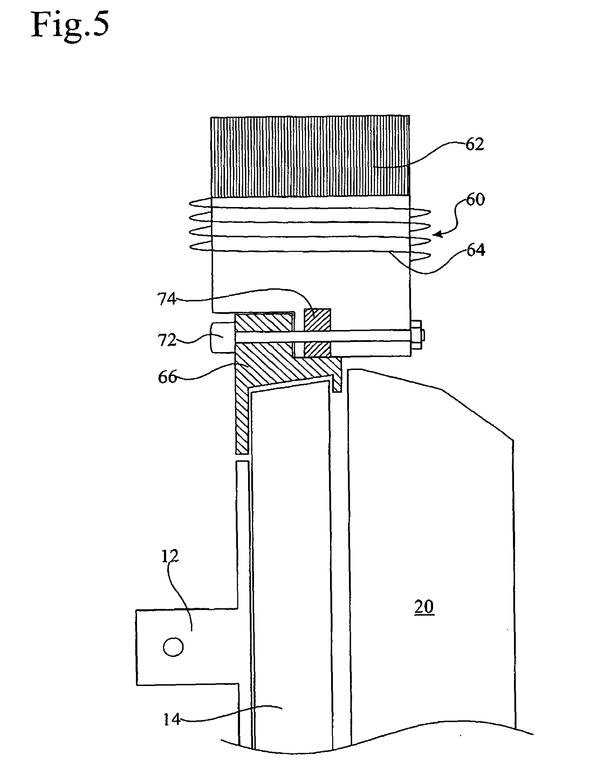

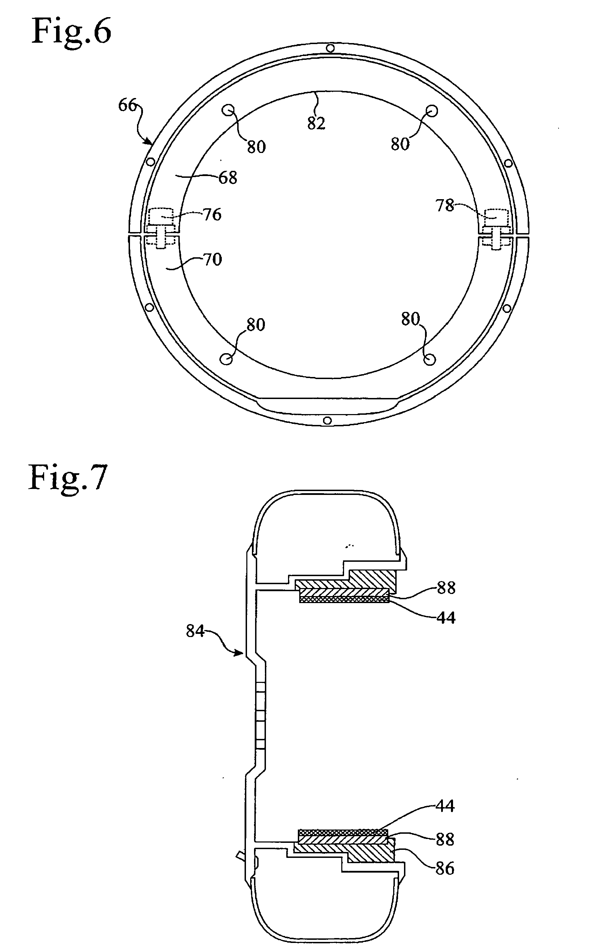

Die Darstellung der Fig. 5 zeigt eine schematische, abschnittsweise Schnittansicht eines an einer Fahrzeugachse montierten Stators 60 gemäß einer weiteren Ausführungsform der Erfindung. Wie Fig. 5 zu entnehmen ist, weist der Stator 60 ein aus zahlreichen Blechen aufgebautes Element 62 auf, das abschnittsweise mit Wicklungen 64 versehen ist und den magnetischen Fluss leitet. Dieses Element 62 ist mit einem Adapterring 66 verbunden, der unmittelbar auf eine Bremsankerplatte 14 aufgesetzt ist. Die Bremsankerplatte 14 ist wiederum an einem lediglich schematisch angedeuteten Hinterachsträger 12 befestigt. Eine Bremstrommel 20 ist drehbar am Hinterachsträger gelagert. Der Adapterring 66 ist zweigeteilt, so dass zwei sich über jeweils 180° erstreckende Hälften 68, 70 vorhanden sind, siehe Fig. 6, die in der Darstellung der Fig. 5 aber nicht zu erkennen sind. Der Adapterring 66 weist auf seiner radial innen liegenden Seite eine Nut auf, die an die Abmessungen des radial außen liegenden Umfangs der Bremsankerplatte 14 angepasst ist. Der Adapterring 66 kann somit von außen auf die Bremsankerplatte aufgeschoben werden. Nach Verbinden der beiden Hälften 68, 70 des Adapterrings 66 wie sie in Figur 6 zu erkennen sind, kann dann das Element 62 mittels mehrerer Schraubbolzen 72 am Adapterring 66, befestigt werden. Vor Festziehen der Schraubbolzen 72 wird das Element 62 mittels mehrerer Zentrierschrauben 74 genau zentrisch zu einer Drehachse der Bremstrommel 20 und damit auch zu einer Drehachse einer Fahrzeugfelge ausgerichtet. Es ist in Fig. 5 zu erkennen, dass durch einfaches Auswechseln des Adapterrings 66 das Element 62 auf unterschiedliche Bremsankerplatten aufgesetzt werden kann.

Die Darstellung der Fig. 6 zeigt den Adapterring 66 schematisch in einer Draufsicht. Der Adapterring 66 besteht aus zwei jeweils halbkreisringförmigen Hälften 68, 70, die mittels in der Darstellung der Fig. 6 an und für sich nicht erkennbaren und daher gestrichelt dargestellten Schraubbolzen 76, 78 zusammengehalten werden. Zweckmäßigerweise ist der Innenumfang der Nut am Adapterring 66 so bemessen, dass nach Festziehen der Schraubbolzen 76, 78 der Adapterring 66 unter Spannung auf dem Außenumfang der Bremsankerplatte 14 aufsitzt und dadurch zuverlässig an dieser gehalten wird. Zusätzlich kann der Adapterring 66 mittels Schraubbolzen, die durch Durchgangsöffnungen 80 gesteckt werden, an der Bremsankerplatte 14 befestigt werden. Grundsätzlich ist die Gestaltung der radial innen liegenden Begrenzung 82 des Adapterrings 66 beliebig und wird zweckmäßigerweise an die Formgebung der Bremsankerplatte 14 angepasst.

Die Darstellung der Fig. 7 zeigt eine schematische Schnittansicht einer Fahrzeugfelge 84, die zusammen mit mehreren Permanentmagneten 44 und einem Adapterring 86 den Rotor für den erfindungsgemäßen Radnabenmotor bildet und beispielsweise auf die Bremstrommel 20 der Fig. 5 aufgesetzt werden kann. Die Felge 84 kann als Aluminiumfelge ausgebildet sein. Ein magnetischer Kreis kann dann über das magnetisch leitfähige Material des Adapterrings 86 geschlossen werden. Der Adapterring 86 ist mit mehreren, in Umfangsrichtung aufeinanderfolgenden Ausnehmungen 88 versehen, die jeweils auf die Größe der Permanentmagnete 44 angepasst sind. In diesen Ausnehmungen können die Permanentmagnete 44 beispielsweise verklebt oder vergossen werden. Der Adapterring 86 ist im Querschnitt stufenförmig ausgebildet, um eine konzentrisch zur Mittelachse der Felge 84 umlaufende Fläche zu bilden, auf die die Permanentmagnete 44 dann aufgeklebt werden können. Selbstverständlich kann der Adapterring 66 auch zusammen mit einer Stahlfelge verwendet werden. In diesem Fall kann das Material der Stahlfelge zusätzlich zum Adapterring zum Führen des magnetischen Flusses herangezogen werden. Prinzipiell ist bei Stahlfelgen sogar das Aufkleben der Permanentmagnete unmittelbar auf die Felge möglich.

## Patentansprüche

1. Elektro-Radnabenmotor für Kraftfahrzeuge mit einem an einer Fahrzeugachse befestigten Stator (24; 54) und einem an einer Fahrzeugfelge (40) angeordneten Rotor, wobei die Fahrzeugachse an jedem äußeren Ende eine Trommelbremse mit Bremsankerplatte und Bremstrommel aufweist, **dadurch gekennzeichnet, dass** der Stator (24; 54) mittels eines Adapters an der Bremsankerplatte der Fahrzeugachse befestigt ist, der Stator die Bremstrommel radial außen umgibt und dass der Rotor an der Fahrzeugfelge (40) angeordnete Permanentmagnete (44) aufweist.

2. Elektro-Radnabenmotor nach Anspruch 1, **dadurch gekennzeichnet, dass** der Stator (24) einen Adapterring (32) zum Befestigen an der Bremsankerplatte (30) aufweist.

3. Elektro-Radnabenmotor nach Anspruch 2, **dadurch gekennzeichnet, dass** der Adapterring (32) mit Zentriermitteln (36) versehen ist.

4. Elektro-Radnabenmotor nach einem der vorstehenden Ansprüche, **dadurch gekennzeichnet, dass** die Permanentmagnete (44) mit der Fahrzeugfelge (40) oder einem Adapterring (86) verklebt sind.

5. Elektro-Radnabenmotor nach einem der vorstehenden Ansprüche, **dadurch gekennzeichnet, dass** die Permanentmagnete (44) auf einer, im montierten Zustand dem Kraftfahrzeug zugewandten Seite der Felge (40) angeordnet und dem Stator (24; 54) zugewandt sind.

6. Kraftfahrzeug mit wenigstens einem Elektro-Radnabenmotor nach wenigstens einem der vorstehenden Ansprüche, **dadurch gekennzeichnet, dass** ein Stator (24; 54) an einer Bremsankerplatte (30) und ein Rotor an einer Fahrzeugfelge (40) angeordnet ist.

7. Kraftfahrzeug nach Anspruch 6, **dadurch gekennzeichnet, dass** der Stator (24; 54) eine Bremstrommel (20) radial außen umgebend angeordnet ist.

8. Kraftfahrzeug nach Anspruch 6 oder 7, **dadurch gekennzeichnet, dass** der Rotor mittels an einer Fahrzeugfelge (40) angeordneter Permanentmagnete (44) gebildet ist.

## Claims

1. Electrical wheel hub motor for motor vehicles with a stator (24; 54) attached to a vehicle axle and a rotor attached to a wheel rim (40) of the vehicle, whereby the vehicle axle has a drum brake with a brake anchor plate and a brake drum at each outer end, **characterized in that** the stator (24; 54) is fastened to the brake anchor plate of the vehicle axle by means of an adapter, the stator surrounds the outside of the brake drum radially, and that the rotor has permanent magnets (44) arranged on the vehicle wheel rim (40).

2. Electrical wheel hub motor according to Claim 1, **characterized in that** the stator (24) incorporates an adapter ring (32) for fastening it to the brake anchor plate (30).

3. Electrical wheel hub motor according to Claim 2, **characterized in that** the adapter ring (32) incorporates centring means (36).

4. Electrical wheel hub motor according to one of the foregoing claims, **characterized in that** the permanent magnets (44) are glued to the vehicle wheel rim (40) or to an adapter ring (86).

5. Electrical wheel hub motor according to one of the foregoing claims, **characterized in that** the permanent magnets (44) are arranged on a side of the rim (40) that faces towards the vehicle when assembled, and are facing the stator (24; 54).

6. Motor vehicle with at least one electrical wheel hub motor according to at least one of the foregoing claims, **characterized in that** a stator (24; 54) is arranged on a brake anchor plate (30) and a rotor is arranged on a vehicle wheel rim (40).

7. Motor vehicle according to Claim 6, **characterized in that** the stator (24; 54) is arranged radially surrounding the outside of a brake drum (20).

8. Motor vehicle according to Claim 6 or 7, **characterized in that** the rotor consists of permanent magnets (44) arranged on a vehicle wheel rim (40).

## Revendications

1. Moteur électrique sur moyeu de roue pour véhicules automobiles, comprenant un stator (24 ; 54) fixé à un essieu du véhicule et un rotor disposé sur une jante (40) du véhicule, l'essieu du véhicule présentant à chacune de ses extrémités extérieures un frein à tambour avec plateau de frein et tambour de frein, **caractérisé en ce que** le stator (24 ; 54) est fixé au plateau de frein de l'essieu du véhicule au moyen d'un adaptateur, que le stator entoure extérieurement dans le sens radial le tambour de frein et que le rotor présente des aimants permanents (44) disposés sur la jante du véhicule (40).

2. Moteur électrique sur moyeu de roue selon la revendication 1, **caractérisé en ce que** le stator (24) présente un anneau adaptateur (32) pour la fixation au plateau de frein (30).

3. Moteur électrique sur moyeu de roue selon la revendication 2, **caractérisé en ce que** l'anneau adaptateur (32) est muni de moyens de centrage (36).

4. Moteur électrique sur moyeu de roue selon l'une des revendications précédentes, **caractérisé en ce que** les aimants permanents (44) sont collés sur la jante (40) du véhicule ou sur un anneau adaptateur (86).

5. Moteur électrique sur moyeu de roue selon l'une des revendications précédentes, **caractérisé en ce qu'**à l'état monté, les aimants permanents (44) sont disposés du côté de la jante (40) orienté vers le véhicule automobile et sont orientés vers le stator (24 ; 54).

6. Véhicule automobile avec au moins un moteur électrique sur moyeu de roue selon au moins une des revendications précédentes, **caractérisé en ce qu'**un stator (24 ; 54) est disposé sur un plateau de frein (30) et un rotor sur une jante (40) du véhicule.

7. Véhicule automobile selon la revendication 6, **caractérisé en ce que** le stator (24 ; 54) est disposé de manière à entourer un tambour de frein (20) extérieurement dans le sens radial.

8. Véhicule automobile selon la revendication 6 ou 7, **caractérisé en ce que** le rotor est constitué par des aimants permanents (44) disposés sur une jante (40) du véhicule.
